(19) Europäisches Patentamt
European Patent Office
Office européen des brevets

(11) Veröffentlichungsnummer: **0 046 730**
**A1**

(12) # EUROPÄISCHE PATENTANMELDUNG

(21) Anmeldenummer: 81810334.3

(22) Anmeldetag: 17.08.81

(51) Int. Cl.³: C 07 F 9/165
C 07 F 9/48, A 01 N 57/10
A 01 N 57/18

(30) Priorität: 22.08.80 CH 6352/80
30.06.81 CH 4303/81

(43) Veröffentlichungstag der Anmeldung:
03.03.82 Patentblatt 82/9

(84) Benannte Vertragsstaaten:
AT BE CH DE FR GB IT LI NL

(71) Anmelder: CIBA-GEIGY AG
Patentabteilung Postfach
CH-4002 Basel(CH)

(72) Erfinder: Drabek, Jozef, Dr.
Benkenstrasse 12
CH-4104 Oberwil(CH)

(54) **Organophosphor-Zinnverbindungen, ihre Herstellung und ihre Verwendung als Schädlingsbekämpfungsmittel.**

(57) Organophosphor-Zinnverbindungen der Formel

$$R_1X_1-\overset{\displaystyle H}{\underset{\displaystyle O}{\overset{|}{\underset{\|}{P}}}}-O-Sn(R_2)_3$$

worin $R_1$ $C_1$-$C_5$-Alkyl, Phenyl oder Benzyl, $R_2$ Methyl, Cyclohexyl oder Phenyl und $X_1$ Sauerstoff oder die direkte Bindung bedeuten.

Verfahren zur Herstellung dieser Organophosphor-Zinnverbindungen und ihre Verwendung in der Schädlingsbekämpfung werden beschrieben.

EP 0 046 730 A1

Croydon Printing Company Ltd.

0046730



CIBA-GEIGY AG

Basel (Schweiz)

5-13025/1+2

BEZEICHNUNG GEÄNDERT siehe Titelseite

Zinnverbindungen

Die vorliegende Erfindung betrifft Organophosphor-Zinnverbindungen, Verfahren zu ihrer Herstellung und ihre Verwendung in der Schädlingsbekämpfung.

Die Organophosphor-Zinnverbindungen haben die Formel

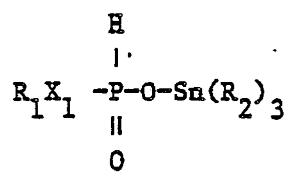

(I),

worin $R_1$ $C_1$-$C_5$-Alkyl, Phenyl oder Benzyl und $R_2$ Methyl, Cyclohexyl oder Phenyl und $X_1$ Sauerstoff oder die direkte Bindung bedeuten.

Die bei $R_1$ in Frage kommenden Alkylgruppen können geradkettig oder verzweigt sein. Diese Gruppen sind: Methyl, Aethyl, Propyl, Isopropyl, n-, i-, sek.-, tert.-Butyl, n-Pentyl und dessen Isomere.

Bevorzugt sind Verbindungen der Formel I, worin

$R_1$ $C_1$-$C_5$-Alkyl,

$R_2$ Cyclohexyl oder Phenyl und

$X_1$ Sauerstoff bedeuten.

Die Verbindungen der Formel I können nach an sich bekannten Methoden z.B. wie folgt hergestellt werden:

1) 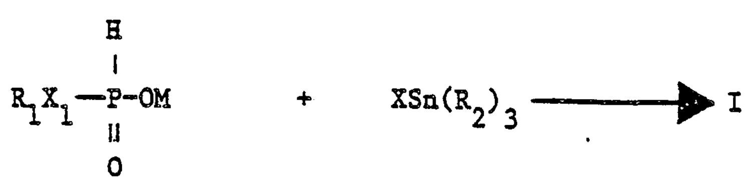

(II) (III)

2) 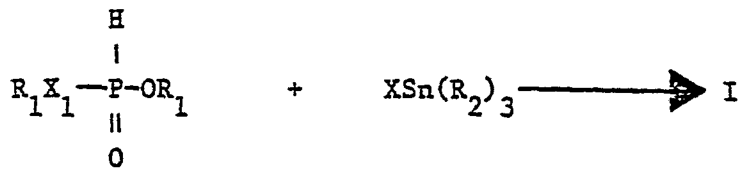

(IV) (III)

In den Formeln II, III und IV haben $X_1$, $R_1$ und $R_2$ die für die Formel I angegebene Bedeutung und M steht für ein Alkalimetall, Ammonium oder Trialkylammonium und X für ein Halogenatom.

Das Verfahren 1 wird zweckmässig bei einer Temperatur zwischen -10 bis 120°C, vorzugsweise zwischen 20 bis 80°C und das Verfahren 2 bei 50 bis 150°C, vorzugsweise bei 80 bis 150°C, bei normalem oder leicht erhöhtem Druck und vorzugsweise in Gegenwart eines gegenüber den Reaktionsteilnehmern inerten Lösungs- oder Verdünnungsmittels durchführt.

Als Lösungs- oder Verdünnungsmittel eignen sich z.B. Aether und ätherartige Verbindungen wie Diäthyläther, Di-isopropyläther, Dioxan und Tetrahydrofuran; aromatische Kohlenwasserstoffe wie Benzol, Toluol und Xylole; und Ketone wie Aceton, Methyläthylketon und Cyclohexanon.

Die Ausgangsstoffe der Formeln II, III und IV sind bekannt und können nach bekannten Methoden hergestellt werden.

Die Verbindungen der Formel I eignen sich zur Bekämpfung von verschiedenartigen Schädlingen an Tieren und Pflanzen.

Insbesondere eignen sich die Verbindungen der Formel I zur Bekämpfung aller Entwicklungsstadien von Insekten, phytopathogenen und tierparasitären Läusen, Milben sowie von Zecken, z.B. der Ordnungen Lepidoptera, Coleoptera, Homoptera, Heteroptera, Diptera, Acarina, Thysanoptera, Orthoptera, Anoplura, Siphonaptera, Mallophaga, Thysanura, Isoptera, Psocoptera und Hymenoptera.

Vor allem eignen sich Verbindungen der Formel I zur Bekämpfung von pflanzenschädigenden Milben.

Wirkstoffe der Formel I zeigen auch eine sehr günstige Wirkung gegen Fliegen, wie z.B. Musca domestica und Mückenlarven. Daneben zeichnen sich die Verbindungen der Formel I durch eine breite ovizide und ovilarvizide Wirkung aus.

Wirkstoffe der Formel I haben auch eine gute fungizide Wirkung.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln,Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den angegebenen Verhältnissen entsprechend gewählt.

Die Formulierungen d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan

oder Paraffine, Alkohole und Glykole sowie deren Aether und Ester, wie Aethanol, Aethylenglykol, Aethylenglykolmonomethyl- oder -äthyl äther, Ketone wie Cyclohexanon, stark polare Lösungsmittel wie N-Methyl-2-pyrrolidion, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit, Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeigente anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze von Phosphorsäureesters eines p-Nonylphenol-(4-14)-Aethylenoxyd-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten

Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxydaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgender Publikation beschrieben:
"McCutcheon's Detergents and Emulsifiers Annual" MC Publishing Corp., Ringwood New Jersey, 1979.

Die pestiziden Zubereitungen enthalten in der Regel 0,1 bis 99%, insbesondere 0,1 bis 95%, Wirkstoff der Formel I, 1 bis 99,9% eines festen oder flüssigen Zusatzstoffes und 0 bis 25%, insbesondere 0,1 bis 25%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I
(% = Gewichtsprozent)

| 1. Emulsions-Konzentrate | a) | b) | c) |
|---|---|---|---|
| Wirkstoff | 20% | 40% | 50% |
| Ca-Dodecylbenzolsulfonat | 5% | 8% | 5,8% |
| Ricinusöl-polyäthylenglykoläther (36 Mol AeO) | 5% | - | - |
| Tributylphenoyl-polyäthylenglykoläther (30 Mol AeO) | - | 12% | 4,2% |
| Cyclohexanon | - | 15% | 20% |
| Xylolgemisch | 70% | 25% | 20% |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff | 80% | 10% | 5% | 95% |
| Aethylenglykol-monomethyl-äther | 20% | - | - | - |
| Polyäthylenglykol M G 400 | - | 70% | - | - |
| N-Methyl-2-pyrrolidon | - | 20% | - | - |
| Epoxydiertes Kokosnussöl | - | - | 1% | 5% |
| Benzin (Siedegrenzen 160-190°C) | - | - | 94% | - |

Die Lösungen sind zur Anwendung in Form kleinster Tropfen geeignet.

| 3. Granulate | a) | b) |
|---|---|---|
| Wirkstoff | 5% | 10% |
| Kaolin | 94% | - |
| Hochdisperse Kieselsäure | 1% | |
| Attapulgit | - | 90% |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff | 2% | 5% |
| Hochdisperse Kieselsäure | 1% | 5% |
| Talkum | 97% | - |
| Kaolin | - | 90% |

Durch inniges Vermischen der Trägerstoffe mit dem Wirkstoff erhält man gebrauchsfertige Stäubemittel.

Formulierungsbeispiele für feste Wirkstoffe der Formel I

(% = Gewichtsprozent)

| 5. Spritzpulver | a) | b) |
|---|---|---|
| Wirkstoff | 20% | 60% |
| Na-Ligninsulfonat | 5% | 5% |
| Na-Laurylsulfat | 3% | - |
| Na-Diisobutylnaphthalinsulfonat | - | 6% |
| Octylphenolpolyäthylenglykoläther (7-8 Mol AeO) | - | 2% |
| Hochdisperse Kieselsäure | 5% | 27% |
| Kaolin | 67% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10% |
| Octylphenolpolyäthylenglykoläther (4-5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff | 5% | 8% |
| Talkum | 95% | - |
| Kaolin | - | 92% |

Man erhält anwendungsfertige Stäubemittel, indem der Wirkstoff mit den Träger vermischt und auf einer geeigneten Mühle vermahlen wird.

8. Extruder Granulat

| | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

9. Umhüllungs-Granulat

| | |
|---|---|
| Wirkstoff | 3% |
| Polyäthylenglykol (M G 200) | 3% |
| Kaolin | 94% |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

<u>10. Suspensions-Konzentrat</u>

| | |
|---|---|
| Wirkstoff | 40% |
| Aethylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der fein gemahlene Wirkstoff wird mit den Zusatzstoffen innig vermischt. Man erhält so ein Suspensions-Konzentrat aus welchem durch Verdünnen mit Wasser Suspensionen jeder gewünschten Konzentration hergestellt werden können.

<u>Beispiel 1: Herstellung von O-Aethyl-O-(tricyclohexylzinn)-phosphit.</u>

6,35 g O-Aethylammoniumphosphit und 16,4 g Tricyclohexylzinnchlorid werden in 100 ml Aceton bei 55 - 60°C 16 Stunden gerührt. Das Reaktionsgemisch wird abgenutscht und der feste Bestandteil auf der Nutsche mit Wasser gewaschen. Der in Wasser unlösliche Anteil wird im Vakuum getrocknet.

Man erhält die Verbindung der Formel

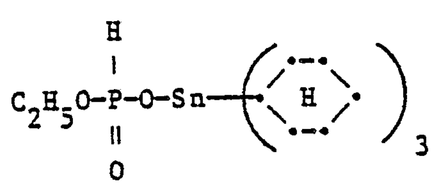

mit einem Schmelzpunkt von 255 - 260°C/Zers.

Auf analoge Weise werden auch folgende Verbindungen hergestellt:

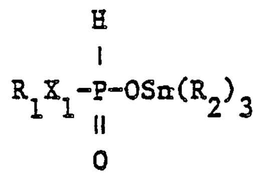

| $R_1X_1$ | $R_2$ | Physikalische Daten |
|---|---|---|
| $CH_3O-$ | 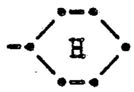 | Smp.: 252-255°C |
| $(n)C_3H_7O-$ | 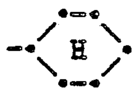 | Smp.: 240°C |
| $(n)C_4H_9O-$ | 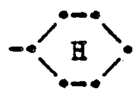 | Smp.: 208-216°C |
| 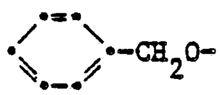 | 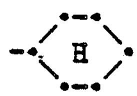 | Smp.: 173-183°C |
| $C_2H_5O-$ | 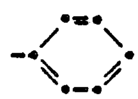 | Smp.: 179-180°C |
| 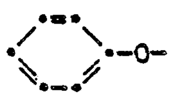 | 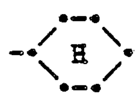 | Smp.: 226-232°C |
| $(n)C_3H_7O-$ | 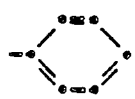 | Smp.: 140-145°C |
| 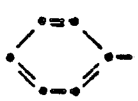 | 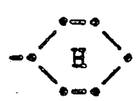 | Smp.: > 270°C |

| $R_1X_1$ | $R_2$ | Physikalische Daten |
|---|---|---|
| 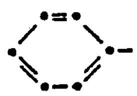 | 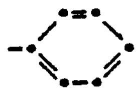 | Smp.: 245-247°C |
| (n)$C_4H_9O$- | 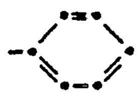 | Smp.: 127-129°C |
| (i)$C_3H_7O$- | 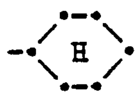 | Smp.: 220-228°C |
| (n)$C_{12}H_{25}O$- | 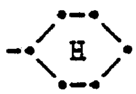 | $n_D^{22°}$:1,5119 |
| (i)$C_3H_7O$- | 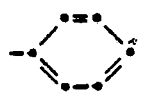 | Smp.: 175-179°C |
| $CH_3O$- | 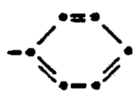 | Smp.: 246-248°C |
| i-$C_3H_7O$ | $-CH_3$ | $n_D^{21°}$: 1,4651 |
| 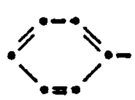 | $-CH_3$ | $n_D^{21°}$: 1,5516 |
| 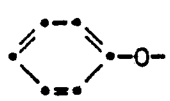 | $-CH_3$ | $n_D^{21°}$: 1,5332 |

Beispiel 2:

Herstellung von O-Methyl-(O-triphenylzinn)-phosphit.

15,4 g Triphenylzinnchlorid und 17.6 g Trimethylphosphit werden drei Stunden bei 120 bis 140°C gerührt. Nach der Abkühlung wird das Reaktionsgemisch abgenutscht und auf der Nutsche gewaschen. Das Rohprodukt wird in Chloroform gelöst, filtriert und die Lösung eingeengt. Man erhält die Verbindung der Formel

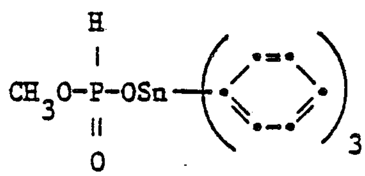 .

Auf analoge Weise werden auch folgende Verbindungen hergestellt:

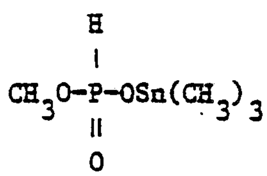

$n_D^{21°}$ = 1,4768

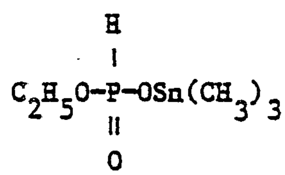

$n_D^{21°}$ = 1,4716

Beispiel 3: Insektizide Frassgift-Wirkung: Spodoptera littoralis, Anthonomus grandis und Heliothis virescens.

Baumwollpflanzen werden mit einer Versuchslösung enthaltend 50, 100, 200 und 400 ppm des zu prüfenden Wirkstoffes bis zur Tropfnässe besprüht.

Nach dem Antrocknen des Belages wurden die Pflanzen mit Adulten von Anthonomus grandis und je mit Larven der Spezies Spodoptera littoralis (L3-Stadium), oder Heliothis virescens (L3) besetzt. Man verwendete pro Versuchsverbindung und pro Test-Spezies zwei Pflanzen und eine Auswertung der erzielten Abtötungsrate erfolgte nach 2, 4, 24 und 48 Stunden. Der Versuch wurde bei 24°C und bei 60% relativer Luftfeuchtigkeit durchgeführt.

Verbindungen gemäss dem Herstellungsbeispiel zeigten die in der folgenden Tabelle angegebene Wirkung gegen Larven der Spezies Spodoptera littoralis und Heliothis virescens sowie Adulten von Anthonomus grandis.

Beispiel 4: Wirkung gegen pflanzenschädigende Akariden: Tetranychus urticae (OP-sensible).

Die Primärblätter von Phaseolus vulgaris Pflanzen wurden 16 Stunden vor dem Versuch auf akarizide Wirkung mit einem infestierten Blattstück aus einer Massenzucht von Tetranychus urticae (OP-sens.) belegt. (Die Toleranz bezieht sich auf die Verträglichkeit von Diazinon).

Die so behandelten infestierten Pflanzen wurden mit einer Versuchslösung enthaltend 400 oder 200 ppm der zu prüfenden Verbindung bis zur Tropfnässe besprüht.

Nach 24 Stunden und wiederum nach 7 Tagen wurden Imagines und Larven (alle beweglichen Stadien) unter dem Binokular auf lebende und tote Individuen ausgewertet.

Man verwendete pro Konzentration und pro Testspezies eine Pflanze. Während des Versuchsverlaufs standen die Pflanzen in Gewächshauskabinen bei 25°C.

Verbindungen gemäss dem Herstellungsbeispiel zeigten die in der folgenden Tabelle angegebene Wirkung gegen Individuen der Spezies Tetranychus urticae.

| 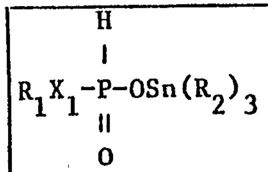 | | Minimalkonzentration in ppm zur 100%igen Abtötung von | | | |
|---|---|---|---|---|---|
| $R_1X_1$ | $R_2$ | Spodoptera littoralis $L_3$ Larven | Heliothis virescens $L_3$ Larven | Anthonomus grandis adult | Tetranychus urticae Larven |
| $CH_3O-$ | 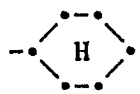 | 200 | - | - | 200 |
| $(n)C_3H_7O-$ | 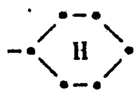 | 200 | 200 | - | 400 |
| $(n)C_4H_9O-$ | 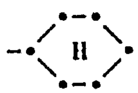 | - | - | - | 400 |
| 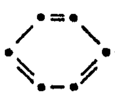 $-CH_2O-$ | 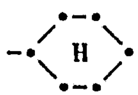 | - | - | - | 400 |
| $C_2H_5O-$ | 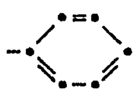 | 200 | - | - | 200 |
| 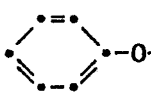 $-O-$ | 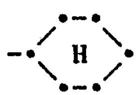 | 200 | - | - | 200 |
| $(n)C_3H_7O-$ | 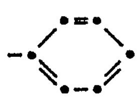 | 100 | 200 | 200 | - |

| H<br>$R_1X_1$-P-OSn$(R_2)_3$<br>O | | Minimalkonzentration in ppm zur 100%igen Abtötung von | | | |
|---|---|---|---|---|---|
| $R_1X_1$ | $R_2$ | Spodoptera littoralis $L_3$ Larven | Heliothis virescens $L_3$ Larven | Anthonomus grandis adult | Tetranychus urticae Larven |
| 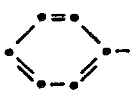 | 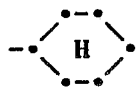 | 200 | - | - | 200 |
| 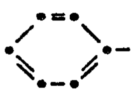 | 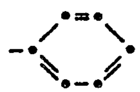 | 200 | - | - | - |
| (n)$C_4H_9O$- | 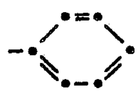 | - | - | 200 | - |
| (i)$C_3H_7O$- | 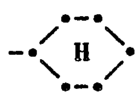 | 200 | - | 200 | - |
| (n)$C_{12}H_{25}O$- | 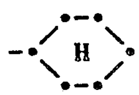 | 200 | - | 400 | - |
| (i)$C_3H_7O$- | 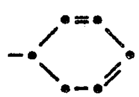 | 200 | - | 200 | - |
| $CH_3O$- | 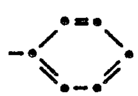 | 200 | - | 200 | - |

Beispiel 4: Residual protektive Wirkung gegen Venturia inaequalis Auf Apfeltrieben

Apfelstecklinge mit 10-20 cm langen Frischtrieben wurden mit einer aus Spritzpulver des Wirkstoffes hergestellten Spritzbrühe (6 0 ppm Aktivsubstanz) besprüht. Nach 24 Stunden wurden die behandelten Pflanzen mit einer Konidiensuspension des Pilzes infiziert. Die Pflanzen wurden dann während 5 Tagen bei 90-100% relativer Luftfeuchtigkeit inkubiert und während 10 weiteren Tagen in einem Gewächshaus bei 20-24°C aufgestellt. Der Schorfbefall wurde 15 Tage nach der Infektion beurteilt. Gegenüber unbehandelten, aber infizierten Trieben (100% Befall), bewirkte eine Behandlung mit Verbindungen gemäss Beispiel 1 fast vollständige Unterdrückung des Venturiabefalls (0-5%).

Patentansprüche:

1. Eine Organophosphor-Zinnverbindung der Formel

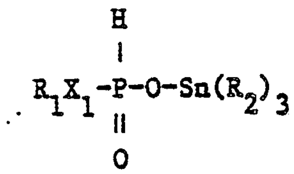

worin $R_1$ $C_1$-$C_5$-Alkyl, Phenyl oder Benzyl, $R_2$ Methyl, Cyclohexyl oder Phenyl und $X_1$ Sauerstoff oder die direkte Bindung bedeuten.

2. Eine Verbindung gemäss Anspruch 1,
worin $R_1$ $C_1$-$C_5$-Alkyl,
$R_2$ Cyclohexyl oder Phenyl und
$X_1$ Sauerstoff bedeuten.

3. Die Verbindung gemäss Anspruch 2 der Formel

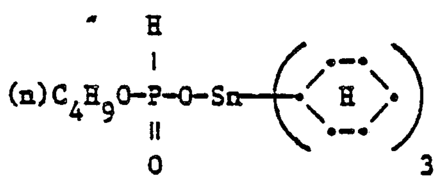

.

4. Die Verbindung gemäss Anspruch 2 der Formel

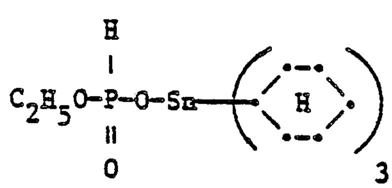

.

5. Die Verbindung gemäss Anspruch 2 der Formel

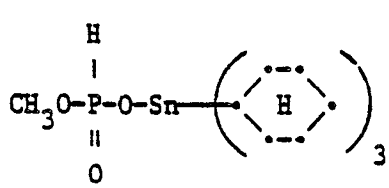

.

6. Die Verbindung gemäss Anspruch 2 der Formel

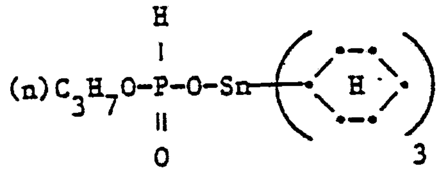

.

7. Die Verbindung gemäss Anspruch 1 der Formel

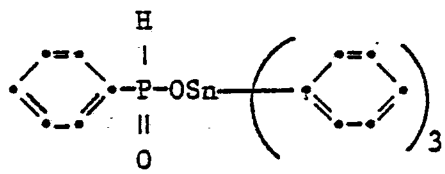

.

8. Die Verbindung gemäss Anspruch 2 der Formel

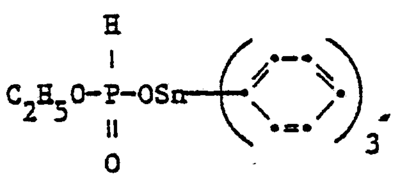

.

9. Die Verbindung gemäss Anspruch 1 der Formel

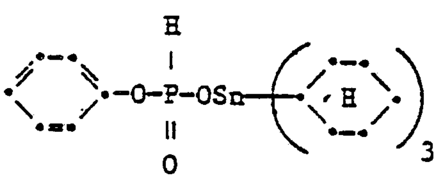

.

10. Die Verbindung gemäss Anspruch 2 der Formel

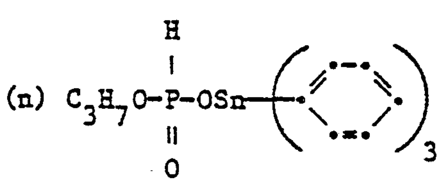

.

11 . Die Verbindung gemäss Anspruch 1 der Formel

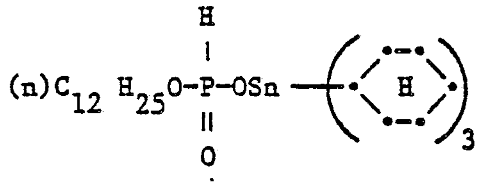

12 . Die Verbindung gemäss Anspruch 1 der Formel

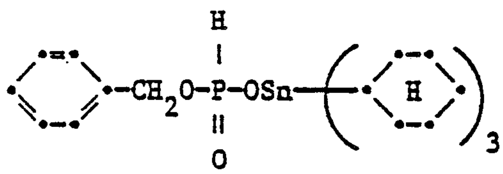

13 . Die Verbindung gemäss Anspruch 2 der Formel

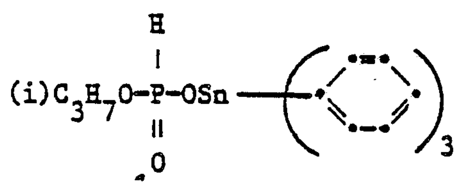

14 . Die Verbindung gemäss Anspruch 2 der Formel

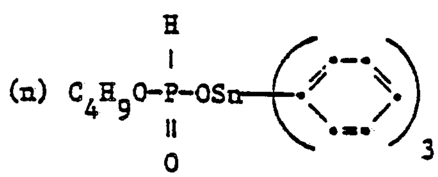

15 . Die Verbindung gemäss Anspruch 2 der Formel

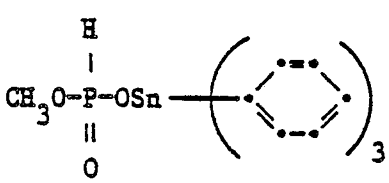

16. Die Verbindung gemäss Anspruch 1 der Formel

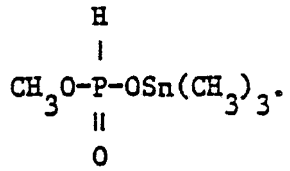

17. Die Verbindung gemäss Anspruch 1 der Formel

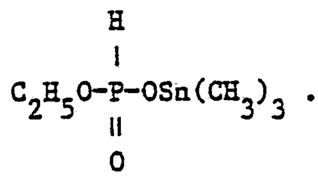

18. Ein Verfahren zur Herstellung von Verbindungen gemäss Anspruch 1, dadurch gekennzeichnet, dass man eine Verbindung der Formeln

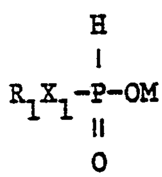

oder

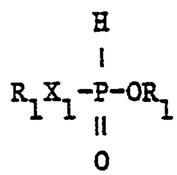

mit einer Verbindung der Formel $XSn(R_2)_3$ reagieren lässt, worin $X_1$, $R_1$ und $R_2$ die im Anspruch 1 angegebene Bedeutung haben und M für ein Alkalimetall, Ammonium oder Trialkylammonium und X für ein Halogenatom steht.

19. Ein Schädlingsbekämpfungsmittel, welches als aktive Komponente eine Verbindung gemäss Anspruch 1 enthält.

20. Die Verwendung einer Verbindung gemäss Anspruch 1 zur Bekämpfung von verschiedenartigen Schädlingen an Tieren und Pflanzen.

21. Die Verwendung gemäss Anspruch 20 zur Bekämpfung von Insekten und Vertretern der Ordnung Akarina.

22. Die Verwendung gemäss Anspruch 20 zur Bekämpfung von Pilzen.

Europäisches Patentamt

**EUROPÄISCHER RECHERCHENBERICHT**

**0046730**

Nummer der Anmeldung

EP 81 81 0334

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 3 100 785 (J.E. DUNBAR)<br>* Insgesamt *<br>--<br>CHEMICAL ABSTRACTS, Band 71, Nr. 17, 27. Oktober 1969, Seite 78, Nr. 82526d<br>Columbus, Ohio, U.S.A.<br>& JP - A - 69 02506 (MITSUBISHI RAYON CO., LTD.) 03-02-1969<br>* Zusammenfassung *<br>--<br>US - A - 3 703 588 (N. SAITO)<br>* Insgesamt *<br>----- | 1,19-22<br><br><br>1<br><br><br><br><br><br>1 | C 07 F 9/165<br>9/48<br>A 01 N 57/10<br>57/18 |
| | | | RECHERCHIERTE SACHGEBIETE (Int. Cl.³) |
| | | | C 07 F 9/165<br>9/48 |
| | | | KATEGORIE DER GENANNTEN DOKUMENTE |
| | | | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 02-11-1981 | BESLIER |